# EUROPEAN PATENT APPLICATION

(11) **EP 1 833 025 A1**
(43) Date of publication of application: **12.09.2007**
(21) Application number: 05819829.2
(22) Date of filing: 22.12.2005
(51) Int. Cl.: G06T 11/80, G06T 1/00, H04N 1/387, G10L 13/00

(54) **IMAGE COMPOSITION DEVICE**

(30) Priority: 28.12.2004 JP 2004380415
(71) Applicant: Oki Electric Industry Company, Limited, Tokyo 105-8460 (JP)
(72) Inventor: YAMAJI, Yoshiki Oki Electric Industry Co., Ltd., Tokyo 1058460 (JP); AMAMOTO, Naohiro Oki Electric Industry Co., Ltd., Tokyo 1058460 (JP)
(74) Representative: Betten & Resch
(86) International application number: PCT/JP2005/023567
(87) International publication number: WO 2006/070680

(57) **Abstract**

In an image composer, an image input unit receives an image signal representative of the image of a subject, and outputs image data corresponding to the image signal to an expression feature extractor. The expression extractor extracts feature data representative of a facial expression contained in the image data. A follow processor reads out object data from an object storage, and performs a follow process on the read object data according to the feature data to feed the processed image data to an expression composer. The expression composer combines the fed image data with one of fed image data, for example, character image, to output image data representing a composite image.

## Description

### TECHNICAL FIELD

The present invention relates to an image composer, and more particularly to an image composer that combines a face image or a character image substitutable for a face image with a secondary virtual object together.

### BACKGROUND ART

Japanese patent laid-open publication No. 2000-322588 discloses an image composer and a method therefor. The image composer and method employ an image composition technique in which the size and position of a virtual object are changed according to changes in size and position of a face in a plane to follow the movement of the face. In this image composition technique, even if an input face image is moved right and left with a virtual cap put on the head, the cap can be neatly placed thereon. This image composition technique can be used as a communication tool for motion pictures.

However, in the above-described method, such an object is a two-dimensional figure, so that even if the orientation of a face is changed like turning of the face, the orientation of the object in the composite image does not change. As a result, the composite image looks extremely unnatural and monotonous. In this respect, it may safely be said that the technique in the aforementioned Japanese publication is a communication tool not functioning properly.

### SUMMARY OF THE INVENTION

It is therefore an object of the present invention to provide an image composer that is capable of expressing a natural composite image in which a secondary image or object looks natural.

In accordance with the present invention, an image composer comprises: image input means for receiving a subject in the form of image signal to output corresponding image data; feature extracting means for extracting feature data representative of a facial expression of the subject contained in the image data; image composition means for combining a plurality of fed image data to produce a composite image; object storage means for storing secondary image data of the plurality of image data, the secondary image data being secondary objects and excluding character data that are basic model images; and follow processing means for performing a follow process on the secondary image data according to the feature data and obtaining the secondary image data to output the obtained secondary image data, the expression composition means producing the composite image on the basis of the secondary image data and character data provided.

The image composer of the present invention outputs a subject received by the image input means to the feature extracting means in the form of image data. The feature extracting means extracts feature data representative of a facial expression contained in the image data, and reads out secondary image data from the obj ect storage means. The follow processing means performs a follow process on the secondary image data according to the feature data, and feeds the processed image data to the image composition means. The image composition means combines the processed image data with one of image data fed, and outputs a composite image. In this manner, the composite image can be produced as an image that looks natural and does not induce a strange feeling.

### BRIEF DESCRIPTION OF THE DRAWINGS

The objects and features of the present invention will become more apparent from consideration of the following detailed description taken in conjunction with the accompanying drawings in which:
FIG. 1 is a block diagram showing a simplified configuration of an embodiment of an image composer according to the present invention;
FIGS. 2A, 2B, and 2C are views useful for understanding a conventional way of object composition;
FIGS. 3A through 3D are views useful for understanding types of expressing alterations in an object image;
FIGS. 4A through 4E are views useful for understanding the principle of composing a character image; and
FIGS. 5 through 8 are block diagrams, similar to FIG.
1, showing configurations of alternative embodiments of the image composer according to the present invention.

### BEST MODE FOR IMPLEMENTING THE INVENTION

Now, embodiments of an image composer in accordance with the present invention will be described in detail with reference to the accompanying drawings. The present embodiment is an image composer 10 to which the present invention is applied.
Parts or elements not directly relevant to understanding of the present invention will neither be described nor shown.

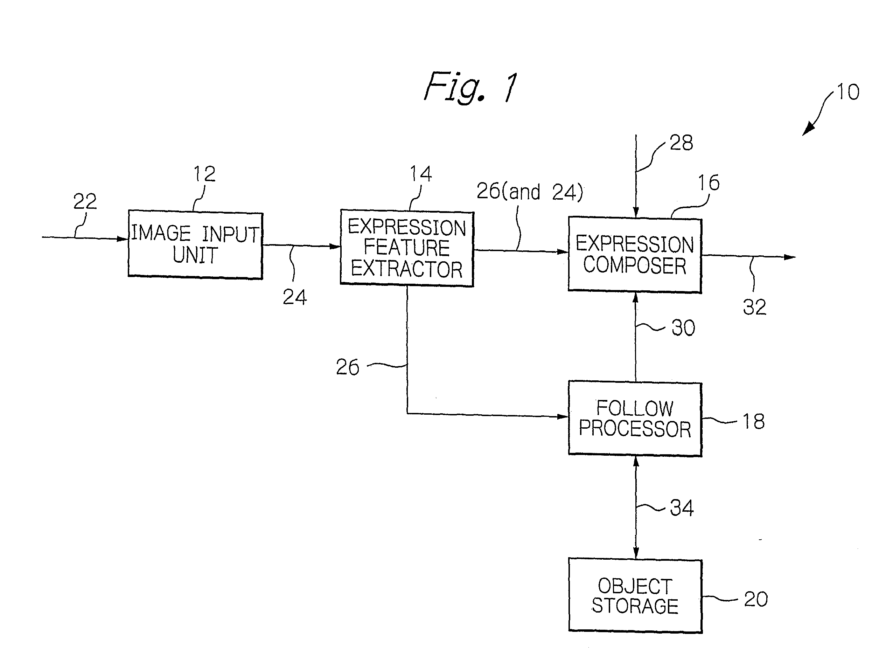

The image composer 10 of the present embodiment, as shown in FIG. 1, includes an image input unit 12, an expression feature extractor 14, an expression composer 16, a follow processor 18, and an object storage 20, which are interconnected as shown.

The image input device 12 has functions of receiving an incident light 22 through an optical system, not shown, from a subj ect on photo-sensitive devices arrayed bi-dimensionally, photoelectrically transducing the light into an analog image signal, and converting the obtained analog image signal to a digital image signal, thereby forming image data in the image composer 10. For example, when a user's face is photographed as a subject, the image input unit 12 outputs the face image to the expression feature extractor 14 in the form of image data 24.

The expression feature extractor 14 has a function of obtaining characteristic or feature data 26 indicative of an expression contained in the incoming image data 24. The expression feature extractor 14 outputs the obtained feature data 26 to the expression composer 16. It is desirable that the expression feature extractor 14 be configured to feed at least the feature data 26 to the expression composer 16, or it may be configured to feed the image data 24 to the latter at the same time. The expression feature extractor 14 outputs expression data that displaces or moves a face so that the feature data 26 is reflected. The expression feature extractor 14 is also connected to the follow processor 18 so that the feature data 26 can be output thereto.

The expression composer 16 has functions of receiving the feature data 26 indicative of an expression and character data 28 which is a basic model selected, moving a characteristic or featured point which the character image of the basic model has, and producing an image in which the characteristic point is reflected on an expression. These functions may be implemented by application software. This image undergoes texture mapping and other processing according to a character image that is to be fed, so that it becomes a two- or three-dimensional image. The expression composer 16 of the present embodiment is adapted to select either a face image or character data 28, and combine the selected data with an object in object data 30 to produce a composite image to output the latter in the form of composite image data 32. The term "object" in the context refers to a virtual obj ect made to imitate a real thing.

The follow processor 18 has a function of reflecting parameters, indicated by a face image contained in the fed feature data 26, on an object to display them. The parameters in the context mean the amount of parallel movement, amount of enlargement or reduction, and amount of turning of the head part in an image, as described later. The follow processor 18 outputs follow data 30 that has altered an object so as to follow a change in a face, to the expression composer 16.

The object storage 20 has a function of storing the data of three-dimensional shapes, such as a ribbon, glasses, and a cap. The object storage 20 is configured to output object data 34 corresponding to user's selection to the follow processor 18.

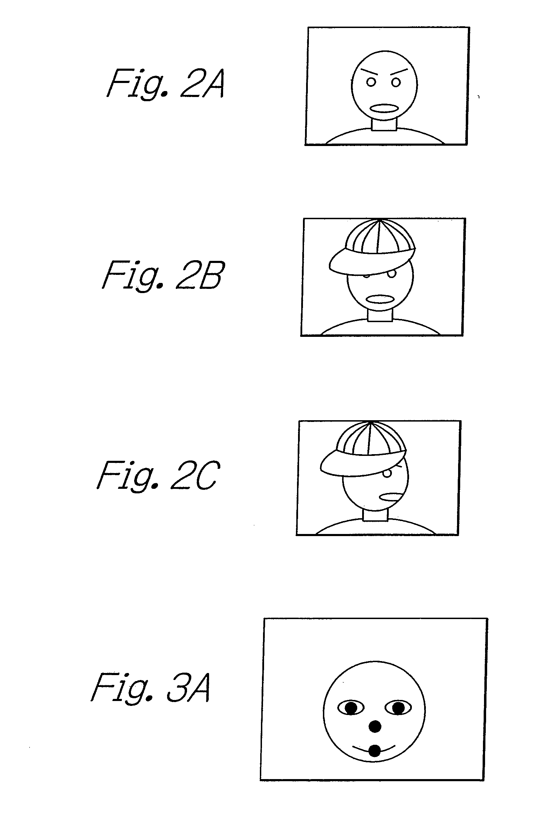

Now, before describing the operational principles of the image composer 10 of the present embodiment, a brief description will be given of the image composer and method taught in aforementioned Japanese patent laid-open publication No. 2000-322558. This prior art document has proposed an image composition technique in which the size and position of a virtual object are changed according to changes in size and position of a face in a plane to follow the movement of the face. The image composition technique that has been proposed is shown in FIGS. 2A, 2B and 2C. If a virtual cap is put as an object on an input face image shown in FIG. 2A, a composite image is obtained as shown in FIG. 2B. Thereafter, even if the face image is moved right and left, as shown in FIG. 2C, the cap remains neatly placed on the head. Thus, the image composition technique can be used as a communication tool for motion pictures.

However, the above-described method is directed to an object in the form of two-dimensional figure, so that even if the orientation or direction of the face is changed like turning of the face, the orientation of the object in the composite image does not change. As a result, the composite image looks extremely unnatural and monotonous. In this respect, it is not too much to say that the technique disclosed in the above Japanese publication is a communication tool not functioning properly.

Now, the operational principles of the image composer 10 in the instant embodiment will be described briefly. The instant embodiment provides users with composite images in which an object looks natural, using the object storage 20 and follow processor 18. This provision can contribute to an increase in number of users. In the following description, signals are given the same reference numerals as the connections over which they appear.

The expression feature extractor 14 produces feature data 26, analyzing at least the orientation of a face and the position of the facial parts such as eyes, a mouth, etc. The feature data 26 contains the amount of alteration of an object. This alteration amount may be expressed, using a matrix of 4 x 4 that is generally used in three-dimensional graphics. Using this matrix, every image operation, such as parallel movement shown in FIG. 2B, variable magnification power such as enlargement or reduction shown in FIG. 2C, and turning shown in FIG. 2D, can be performed with respect to the position of the eyes, nose, and mouth of a reference face image shown in FIG. 3A. The feature data 26 contains information indicating which the alteration of an object is.

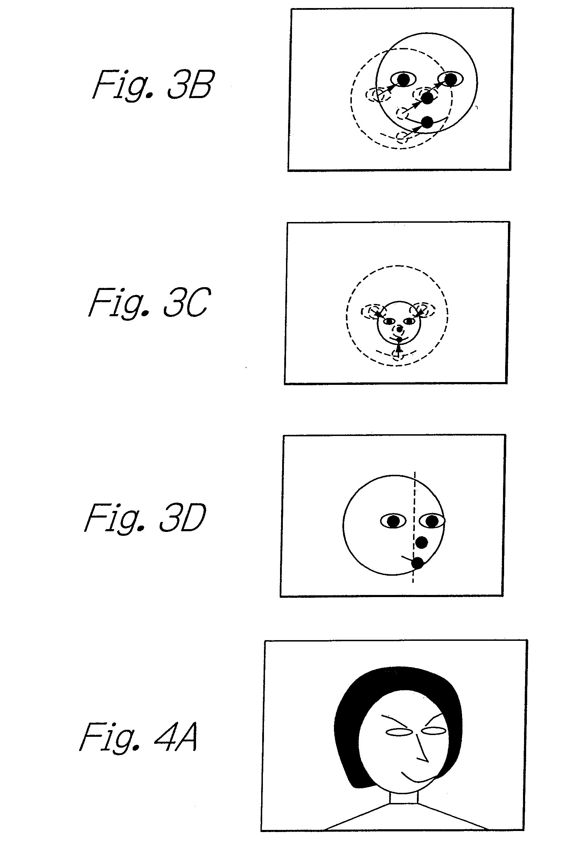

The expression feature extractor 14 analyzes as the amount of alteration of an object a shift of parts, i.e. eyes, a nose, and a mouth, of an input face image with respect to a reference face image. This analysis may be performed by the follow processor 18. The position of the parts in a face may be analyzed, using the technique set forth in Japanese patent laid-open publication No. 2003-281539. As in the example shown in FIG. 3B, when the amounts of movement of the eyes, nose, and mouth of the face image are proportional, the alteration of the face image is determined as parallel movement. As in the example shown in FIG. 3C, when the face image is reduced in size, the alteration of the face image is determined as reduction. As in the example shown in FIG. 3D, when the position of the nose or mouth is shifted from the center position between both eyes, the alteration of the face image is analyzed as turning of the face image.

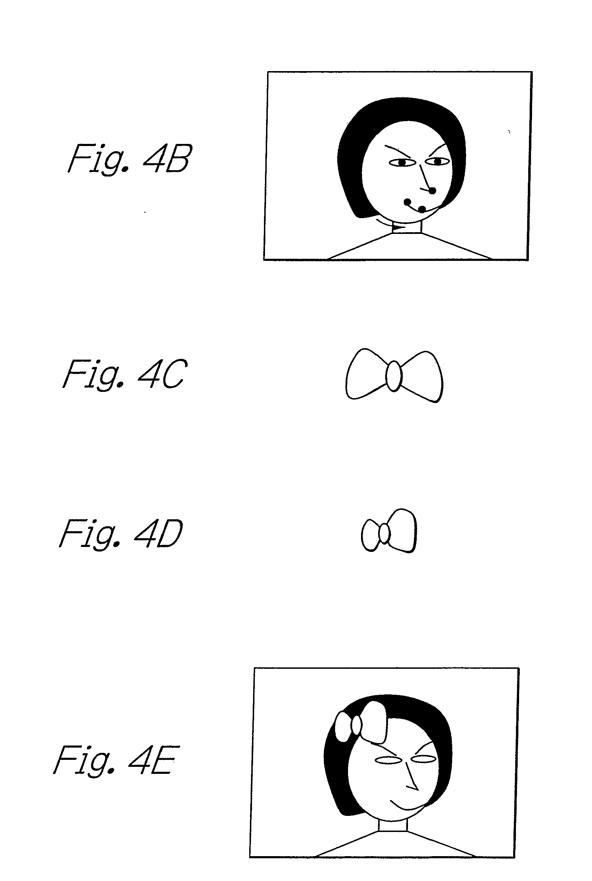

More specifically, if the data 24 of a face image shown in FIG. 4A is fed, the expression feature extractor 14 analyzes the amount of alteration of the face image, as shown in FIG. 4B. Next, for example, a ribbon such as shown in FIG. 4C is selected as an object. Next, the follow processor 18 reflects on the selected object the analyzed amount of alteration of the face image such as the amounts of parallel movement, enlargement/reduction and turning, and produces follow data 30 such as shown in FIG. 4D. The expression composer 16 combines the object altered into a proper shape with the fed face image or selected character image, whereby a composite image such as the one shown in FIG. 4E is produced.

It is noted here that a composite image may contain any number of objects. If an object is formed into a plate polygon that is a two-dimensional model, the speed at which image composition is processed can be raised. In addition, if an object is made extremely small by reduction, it is possible to hide that object.

Thus, the present embodiment is capable of producing a natural composite image by producing a three-dimensional object taking the orientation of a user's face into account, and combining it with a character image, etc. Using an object such as a plane which covers an input face image, the present embodiment is also capable of producing an image which has hidden a user's face without hiding its background.

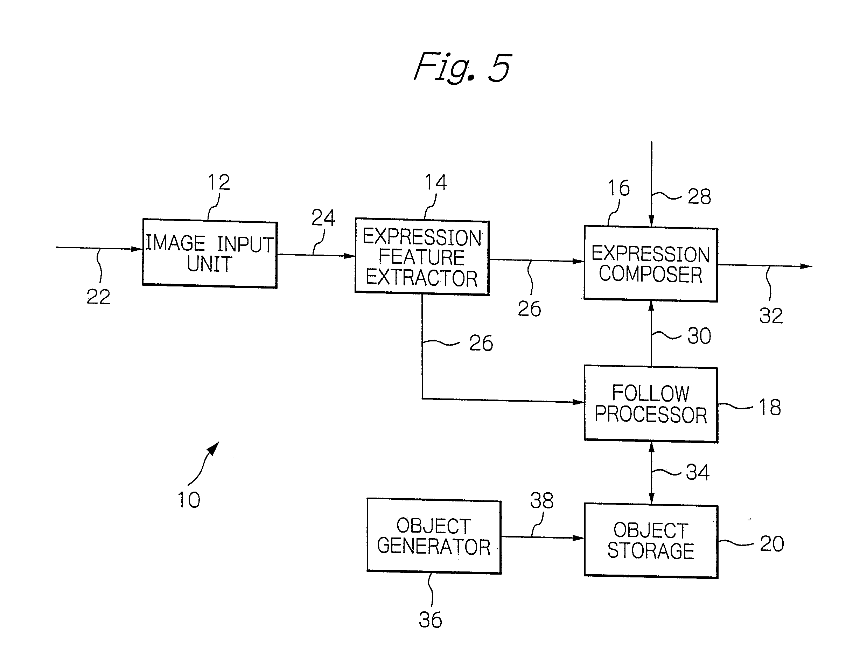

Now, a description will be given of an alternative embodiment of the image composer of the present invention. With reference to FIG. 5, the image composer of the alternative embodiment may be the same as the embodiment shown in and described with reference to FIG. 1, except for additionally including an object generator 36. The object generator 36 has a function to produce an object, for example, by a selecting operation made by a user. The production of an object may be a combination of simple three-dimensional shapes such as a sphere, a rectangular parallelepiped, etc., or a method of pasting basic flat texture shapes of image such as a circle, a square, etc.
The object generator 36 produces object data 38 and feeds the produced object data 38 to the object storage 20, in which the data 38 will be stored. As to the operation of the object generator 36, it stores the produced object data 38, and reads out and uses the object by user' s selection. This is the same as the operation of the image composer shown in FIG. 1, described with reference to FIG. 4.

Thus, by providing the object generator 36, not only do users use predetermined objects, but also can freely produce a variety of objects. This makes it possible to easily increase the number of kinds of composite images that can be produced.

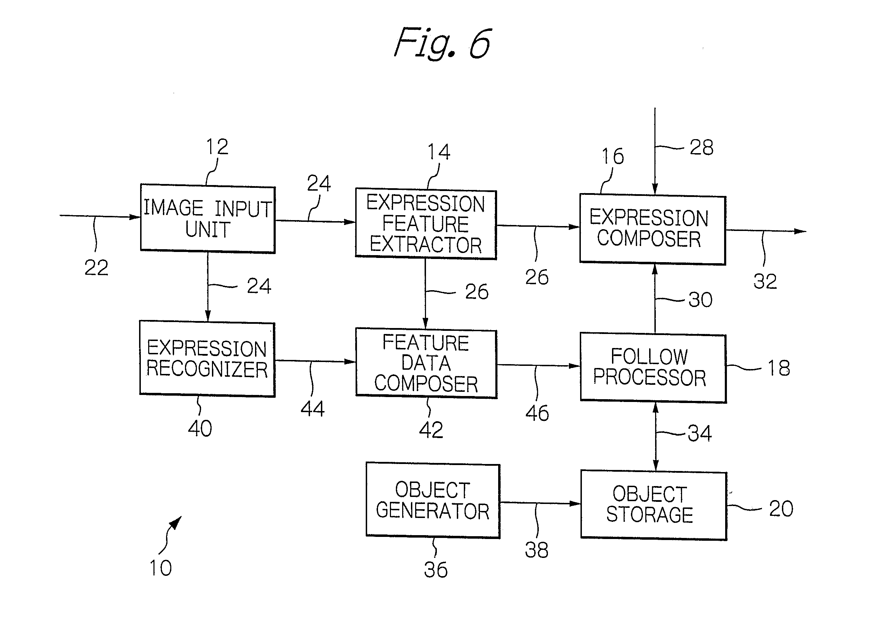

Now, a description will be given of a further alternative embodiment of the image composer to which the present invention is applied. The image composer 10 of this alternative embodiment, as shown in FIG. 6, may be the same as the embodiment shown in FIG. 5, except that it additionally includes an expression recognizer 40 and a feature data composer 42. The expression recognizer 40 has functions to receive the image data 24 of a face image from an image input unit 12, and analyze the expression of the face on the basis of the image data 24 to produce feature data 44 that causes the image composer 10 to operate according to the result of recognition. The expression of a face may be recognized by preparing parameters that represent the state of the elements such as eyes and a nose, and determining, based on the parameters, what the expression of the face is. For instance, in the case of eyes, when eyes slant down outwards, a laughing state is recognized. In addition to expressions of a face, for example, a downcast state may be determined, and generated as an expression parameter. For example, when an expression of sadness is determined and recognized, the expression recognizer 40 outputs feature data 44 corresponding to this recognition to the feature data composer 42.

The feature data composer 42 has a function to combine the feature data 26 fed from an expression feature extractor 40 with the feature data 44 fed from the expression recognizer 40. The feature data composer 42 outputs composite feature data 46 to the follow processor 18.

The follow processor 18 accesses (34) the object storage 20 on the basis of the fed feature data 46, reads out an object representing the recognized expression, and performs a follow process on the read object 34 on the basis of the feature data 46. For instance, the follow processor 18 reads out tears as an object according to the recognition of sadness described above, and displays the tears near eyes by performing the follow process. By displaying a person's face in this manner, the expression of the face can be effectively expressed in various ways.

Thus, an object is altered not only by the position of a face but also by the expression of the face, whereby it can be effectively expressed.

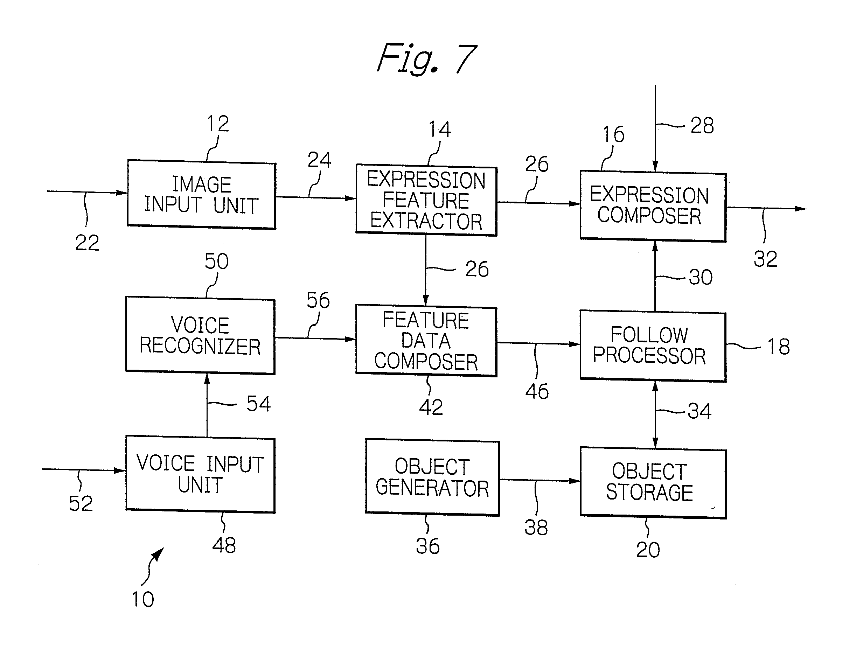

Now, a description will be given of still another alternative embodiment of the image composer to which the present invention is applied. The image composer 10 shown in FIG. 7 may be the same as the embodiment shown in FIG. 5, except that it further additionally includes a voice input unit 48, a voice recognizer 50, and a feature data composer 42 to the configuration shown in FIG. 5.

The voice input unit 48 has functions of capturing surrounding sounds, particularly the voice 52 of a speaker, i.e. user, with a microphone, not shown, to transduce them into an analog voice signal, and converting the analog voice signal to a digital voice signal to provide the latter as voice data 54 to the image composer 10. The voice input unit 48 outputs the voice data 54 to the voice recognizer 50.

The voice recognizer 50 has a function of analyzing the voice data 54 fed from the voice input unit 48 to produce feature data 56 that causes an expression to operate according to the result of recognition. The feature data 5 6 may be produced so as to cause a proper object to operate, taking into consideration not only a voice per se but also sound volume. The feature data 56 may also be made by the recognition of only sound volume. The voice recognizer 50 outputs the recognized feature data 56 to the feature data composer 42.

The follow processor 18 in the image composer 10 reads out an object 34 representing the recognized expression by accessing the object storage 20, and performs a follow process on the read object 34 on the basis of the fed feature data 46. For example, when a user utters "What?" the follow processor 18 reads out as an object a symbol "?" which is to be displayed around the head. Thus, the follow processor 18 analyzes the speech of the input voice 52, and produces, for example, a blowoff image with the speech as an object to output an object image 30 to an expression composer 16. The expression composer 16 then combines the produced object image 30 with a character image selected and outputs display data 32. Even such a configuration is also able to diversify an expression, so that obj ects can be made to operate so as to provide auxiliary effects to the composite image.

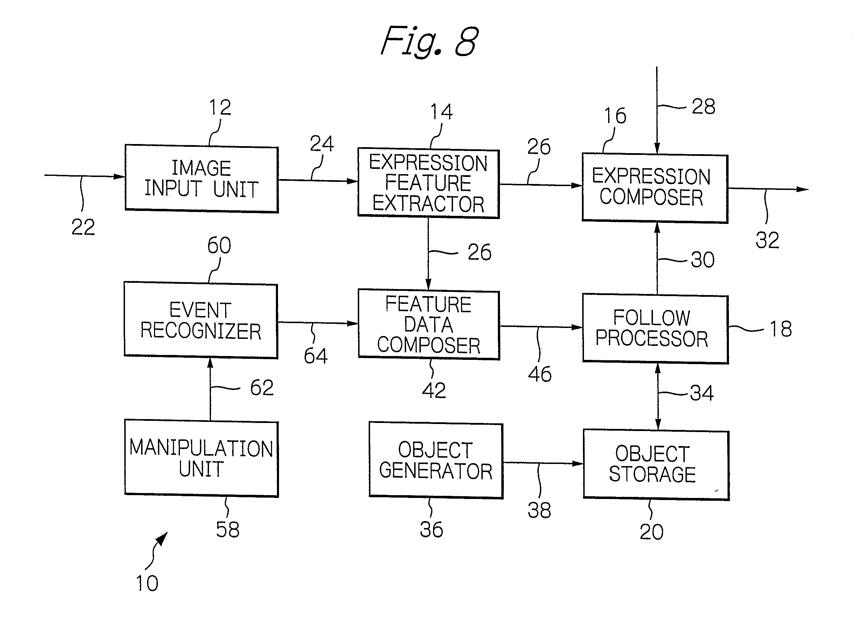

Now, a description will be given of a still further alternative embodiment of the image composer to which the present invention is applied. The image composer 10 shown in FIG. 8 may be the same as the embodiment shown in FIG. 5, except that it further additionally includes a manipulation unit 58, an event recognizer 60, and a feature data composer 42 to the configuration shown in FIG. 5.

The manipulation unit 58 serves as an event input unit, and feeds information reflecting a user's intention into the image composer 10, for example, by depressing a particular key on its keyboard, not shown. The manipulation unit 58 outputs an instruction signal 62 selected by the user to the event recognizer 60.

The event recognizer 60 has a function of producing feature data 64 according to the input information from the user, i.e. instruction signal 62, to output the data 64. The event recognizer 60 outputs the recognized feature data 64 to the feature data composer 42.

The follow processor 18 reads out an object representing the recognized expression by accessing the object storage 20. The follow processor 18 then performs a follow process on the object 34 read out according to the fed feature data 46, on the basis of the feature data 46. The object image 30 on which the follow process was performed is output. To the display composer 16 the feature data 46 contains, for example, the feature data 64 corresponding to the input information 62. Therefore, the object image 30 output by the follow processor 18 has undergone a follow process according to the feature data 46. The expression composer 16 combines the produced object image 30 with a character image selected to output image data 32 containing an expression. Thus, this embodiment is able to form an object that operates according to user's intension.

For example, if a user depresses a particular key on the keyboard of the manipulation unit 58, an object such as a heart mark can be displayed on the eyes. That is, if a user outputs an image of an exaggerated expression that cannot be expressed in a normal image, the composite image can have an expression intended by the user.

Since the image composer 10 is configured as described above, it outputs a subject image received by the image input unit 12 to the expression feature extractor 14 in the form of image data 24, extracts feature data 26 representing the expression of the face from the image data 24, and reads out object data 34 from the object storage 20. The follow processor 18 performs a follow process on the read obj ect data 34 according to the feature data 26, and feeds the processed image data 30 to the expression composer 16. The expression composer 16 combines the image data 30 with one of the image data fed, e.g. character data 28, to output a composite image 32. In this manner, the composite image 32 can be produced as an image that looks natural and does not induced a strange feeling. Thus, it is possible to provide images that can afford users much entertainment.

It is preferable that the expression feature extractor 14 be configured to analyze the orientation and the amount of movement of a face from the position of the parts of an input face image, using a front face image as reference.

To sum up, in the image composer 10, the expression recognizer 40 recognizes the expression of the face image indicated by image data 24, and produces expression feature data 44 according to this recognition. The feature data composer 4 combines the expression feature data 44 and feature data 26 together to output composite feature data 46. The follow processor 18 produces obj ect data 30 on the basis of the composite feature data 46 fed. Thus, the image composer 10 is capable of producing a composite image, giving consideration to a facial expression.

Besides, in the image composer 10, the voice input unit 48 receives a voice 52 and outputs voice data 54. The voice recognizer 50 recognizes a voice on the basis of the voice data 54, and produces voice feature data 56 according to this recognition. The feature data composer 42 combines the voice feature data 56 and feature data 26 to output composite feature data 46. The follow processor 18 produces object data 30 on the basis of the composite feature data 46 fed. Thus, the image composer 10 is capable of producing a composite image, taking a voice into account.

Moreover, in the image composer 10, the manipulation unit 58 receives a predetermined event by user's manipulation. The event recognizer 60 recognizes this event, and produces event feature data 64 according to this recognition. The feature data composer 42 combines the event feature data 64 and feature data 26 to output composite feature data 46. The follow processor 18 produces object data 30 on the basis of the composite feature data 46 fed. Thus, the image composer 10 is capable of producing a composite image that has an expression intended by a user, taking an event into consideration.

It is desirable that to the image composer means applied be the expression composer 16.

The entire disclosure of Japanese patent application No. 2004-380415 filed on December 28, 2004, including the specification, claims, accompanying drawings and abstract of the disclosure, is incorporated herein by reference in its entirety.

While the present invention has been described with reference to the particular illustrative embodiments, it is not to be restricted by the embodiments. It is to be appreciated that those skilled in the art can change or modify the embodiments without departing from the scope and spirit of the present invention.

## Claims

1. An image composer comprising:
image input means for receiving a subject in a form of image signal to output corresponding image data;
feature extracting means for extracting feature data representative of a facial expression of the subject contained in the image data;
image composition means for combining a plurality of fed image data to produce a composite image;
object storage means for storing secondary image data of the plurality of image data, the secondary image data being secondary objects and excluding character data that are basic model images; and
follow processing means for performing a follow process on the secondary image data according to the feature data and obtaining the secondary image data to output the obtained secondary image data;
said expression composition means producing the composite image on a basis of the secondary image data and character data provided.

2. The image composer in accordance with claim 1, wherein said feature extracting means analyzes an orientation and an amount of movement of a face from a position of a part in an input face image with respect to a front face image.

3. The image composer in accordance with claim 1, further comprising:
expression recognizing means for recognizing an expression of a face image represented by the image data, and producing expression feature data according to the recognition; and
feature data composition means for combining the expression feature data and the feature data together to output composite feature data;
said follow processing means producing the secondary image data on the basis of the composite feature data.

4. The image composer in accordance with claim 2, further comprising:
expression recognizing means for recognizing an expression of a face image represented by the image data, and producing expression feature data according to the recognition; and
feature data composition means for combining the expression feature data and the feature data together to output composite feature data;
said follow processing means producing the secondary image data on the basis of the composite feature data.

5. The image composer in accordance with claim 1, further comprising:
voice input means for receiving a surrounding sound in the form of voice signal to output corresponding voice data;
voice recognizing means for recognizing a voice on the basis of the voice data, and producing voice feature data according to the recognition; and
feature data composition means for combining the voice feature data and the feature data together to output composite feature data;
said follow processing means producing the secondary image data on the basis of the composite feature data.

6. The image composer in accordance with claim 2, further comprising:
voice input means for receiving a surrounding sound in the form of voice signal to output corresponding voice data;
voice recognizing means for recognizing a voice on the basis of the voice data, and producing voice feature data according to the recognition; and
feature data composition means for combining the voice feature data and the feature data together to output composite feature data;
said follow processing means producing the secondary image data on the basis of the composite feature data.

7. The image composer in accordance with claim 1, further comprising:
manipulation means for inputting an event through user's manipulation;
event recognizing means for recognizing the input event, and producing event feature data according to the recognition; and
feature data composition means for combining the event feature data and the feature data together to output composite feature data;
said follow processing means producing the secondary image data on the basis of the composite feature data.

8. The image composer in accordance with claim 2, further comprising:
manipulation means for inputting an event through user's manipulation;
event recognizing means for recognizing the input event, and producing event feature data according to the recognition; and
feature data composition means for combining the event feature data and the feature data together to output composite feature data;
said follow processing means producing the secondary image data on the basis of the composite feature data.

9. The image composer in accordance with claim 1, wherein said image composition means further comprises expression composition means for altering the character data selected by a user on a basis of the feature data to produce a composite character image.
